Europäisches Patentamt

(19) European Patent Office

Office européen des brevets

(11) Publication number: **0 271 299 B1**

## EUROPEAN PATENT SPECIFICATION

(45) Date of publication of patent specification: 26.06.91

(51) Int. Cl.⁵: **C01B 3/02**, B01J 19/00, B01J 8/06

(21) Application number: **87310717.1**

(22) Date of filing: **04.12.87**

(54) Apparatus and use thereof in the production of synthesis gas.

(30) Priority: **10.12.86 GB 8629497**

(43) Date of publication of application:
**15.06.88 Bulletin 88/24**

(45) Publication of the grant of the patent:
**26.06.91 Bulletin 91/26**

(84) Designated Contracting States:
**BE DE FR GB IT NL**

(56) References cited:
**EP-A- 0 124 226**
**EP-A- 0 171 786**
**GB-A- 2 153 382**

(73) Proprietor: **The British Petroleum Company p.l.c.**
**Britannic House Moor Lane**
**London EC2Y 9BU(GB)**

(72) Inventor: **Hardmann, Stephen British Petroleum Company p.l.c.**
**Britannic House West Moor Lane**
**London EC2Y 9BU(GB)**
Inventor: **McFarlane, Roderick Arthur**
**19 High View**
**Cheam Surrey SM2 7DZ(GB)**

(74) Representative: **Richardson, Derek et al**
**BP INTERNATIONAL LIMITED Patents & Agreements Division Chertsey Road Sunbury-on-Thames Middlesex TW16 7LN(GB)**

## Description

The present invention relates to an apparatus for the production of synthesis gas, and to its use in the production of synthesis gas from a gaseous hydrocarbon feed.

The term synthesis gas is generally applied to a gaseous mixture principally comprising carbon monoxide and hydrogen, but also possibly containing carbon dioxide and minor amounts of methane and nitrogen, though the term is often also applied to gaseous mixtures principally comprising nitrogen and hydrogen, useful in the production of ammonia. It is with the former meaning of the term that the present invention is principally but not exclusively concerned. Synthesis gas is used, or is potentially useful, as feedstock in a variety of large-scale chemical processes, for example the production of methanol and the production of gasoline boiling range hydrocarbons by the Fischer-Tropsch process.

The production of synthesis gas is generally accomplished by either steam reforming, which includes convective reforming, autothermal reforming or partial oxidation of light hydrocarbons. Steam reforming is a highly endothermic reaction which is generally carried out in multitubular reactors with excess steam to prevent carbon build-up on the catalyst. Steam reforming generally produces synthesis gas having a hydrogen to carbon monoxide ratio of at least 3:1 depending upon the excess steam used, which ratio being higher than that required for subsequent conversion into, for example methanol (ratio of 2:1), requires further adjustment for this purpose. Non-catalytic partial oxidation is effected in burners specially designed for partial combustion of rich fuel/oxygen mixtures. In order to achieve useful conversions and product gas compositions, however, it is necessary to use more than the stoichiometric amount of oxygen, which results in higher exit gas temperatures and associated expense in oxygen plant and downstream cooling to temperatures suitable for conversion. Autothermal reforming may be regarded as a combination of steam-reforming and partial oxidation wherein the heat of reaction for highly endothermic reforming reactions is supplied in part by partial combustion of the feed in oxygen. Excess steam is also necessary in this process to limit coke deposition on the catalyst.

It has already been proposed to combine certain of these reactions within a single reaction vessel, see for example EP-A-0124226 and GB-A-2153382, with associated advantage in internal heat recovery or utilisation.

EP-A-0124226 discloses apparatus for the endothermic reaction of a hydrocarbon or hydrocarbon derivative with steam and/or carbon dioxide comprising:

an outer shell;

mutually parallel first and second tube plates disposed across the shell and dividing it into three successive zones, namely a heat exchange zone, a reactants feed zone and a products offtake zone;

at least one relatively wide tube extending into the heat exchange zone from the first tube plate bounding that zone and closed at its extremity within the zone;

at least one relatively narrow tube extending from the second tube plate into the extremity of each relatively wide tube; and

a steam reforming catalyst in the annular space between the tube.

The primary application of this apparatus is the production of synthesis gas for ammonia synthesis. In this apparatus, which includes autothermal and convective reforming in the same vessel with packing on the shellside of the reformer tubes, the partially reformed gas exiting the steam reforming catalyst is cooled via an internal concentric return tube and leaves via a second tubesheet before being transferred externally to the autothermal reforming section at the top of the vessel.

GB-A-2153382 discloses an autothermal reactor for the production of a synthesis gas, comprising a heat exchange chamber, a first inlet for the introduction of steam and feed gas to said heat exchange chamber, reaction tubes mounted within said heat exchanger chamber and adapted to contain catalyst therein to effect a first reforming reaction, means communicating with said reaction tubes to pass the thus reacted gases from said tubes to a combustion reaction chamber, a second inlet to introduce oxygen or oxygen-enriched air to said combustion reaction chamber, a partition separating said heat exchange chamber from said combustion chamber, said partition including means to permit the passage of combustion reaction effluent therethrough and adapted to provide a second catalyst zone, whereby the combustion reaction effluent can pass through said partition and said second catalyst zone to undergo additional reforming reaction and to produce said synthesis gas, an outlet for removal of said synthesis gas positioned in said reactor approximately adjacent said first inlet, to permit said synthesis gas to pass about the outside of said reaction tubes prior to removal through said outlet and provide heat for said first reforming reaction within said reaction tubes and cooling of said synthesis gas. The apparatus combines convective and autothermal reforming within a single shell. The primary application of the apparatus is the production of synthesis gas for ammonia production. In this apparatus shell side heat transfer is assisted by baffles. It is anticipated that the presence of these baffles is likely to cause problems in the accomodation of thermal expansion. The combustion part of the autothermal reformer is unusual in that it is at the bottom of the vessel underneath a refractory arch. This arch will be subjected to very high temperatures and could be prone to collapse.

We have now developed an apparatus for the production of synthesis gas in which convective steam reforming and autothermal reforming are combined into a single shell in a manner which eliminates external transfer piping and substantially overcomes the potential problems associated with the apparatus of GB-A-2153382.

Accordingly, the present invention provides an apparatus for the production of synthesis gas from a hydrocarbon feed gas which apparatus comprises

an outer shell,

a first inlet at the bottom of the shell for the introduction of preheated gaseous hydrocarbon feed, steam and optionally carbon dioxide,

a steam reforming zone comprising a plurality of tubes together forming a bundle extending upwardly from a tubesheet communicating with the first inlet, the tubes on their tubeside defining three portions (i) a lower empty portion, (ii) an intermediate portion adapted to contain steam reforming catalyst to effect a first steam reforming reaction, and (iii) an upper empty portion,

a combustion zone comprising an oxygen mixer or mixer/burner located in the topmost region of the shell communicating with a second inlet for combustion of hydrocarbon fed therethrough to produce hot combustion gases and thereby heat the first steam reforming reaction product,

an autothermal reforming zone defined by the shellside of the upper empty portion (iii) of the steam reforming tubes and the shell adapted to contain autothermal reforming catalyst to effect a second reforming of the first steam reforming reaction product and combustion product and thereby produce heat for heating by exchange the first steam reforming reaction product in the portion (ii) of the steam reforming tubes,

a heat exchange zone defined by the shellside of the intermediate portion (ii) of the steam reforming tubes and the shell adapted to contain an inert solid material for supporting the autothermal reforming catalyst, for supporting the steam reforming tube bundle and for assisting heat transfer between the shellside and the tubeside thereby heating gases on the tubeside and cooling synthesis gas from the autothermal reforming zone, and

an outlet for synthesis gas exiting from the heat exchange zone.

The apparatus in use will contain steam reforming catalyst, autothermal reforming catalyst and inert solid material.

Accordingly, in another embodiment the invention provides an apparatus for the production of synthesis gas from a hydrocarabon feed gas which apparatus comprises:

an outer shell,

a first inlet at the bottom of the shell for the introduction of preheated gaseous hydrocarbon feed, steam and optionally carbon dioxide,

a steam reforming zone comprising a plurality of tubes together forming a bundle extending upwardly from a tubesheet communicating with the first inlet, the tubes on their tubeside defining three portions (i) a lower empty portion, (ii) an intermediate portion containing steam reforming catalyst to effect a first reforming reaction, and (iii) an open ended upper empty portion,

a second inlet at the top of the shell for the introduction of hydrocarbon, and optionally steam and/or carbon dioxide,

a combustion zone comprising an oxygen mixer or mixer/burner located in the topmost region of the shell communicating with the second inlet for combustion of hydrocarbon fed therethrough to produce hot combustion gases and thereby heat the first steam reforming reaction product,

an autothermal reforming zone defined by the shellside of the upper empty portion (iii) of the steam reforming tubes and the shell containing autothermal reforming catalyst to effect a second reforming of the first steam reforming reaction product and combustion product and thereby produce heat for heating by exchange the first steam reforming reaction product in the portion (ii) of the steam reforming tubes.

a heat exchange zone defined by the shellside of the intermediate portion (ii) of the steam reforming tubes and the shell containing an inert solid material for supporting the steam reforming tube bundle and for assisting heat transfer between the shellside and the tubeside of the tubes thereby heating gases on the tubeside and cooling synthesis gas from the autothermal reforming zone,

an outlet for synthesis gas exiting from the heat exchange zone.

The aforesaid apparatus affords a number of advantages as follows:

(i) By combining convective steam reforming and autothermal reforming into a single shell in a manner which eliminates external transfer piping, costs and heat losses can be reduced,

(ii) heat transfer is improved by the presence of packing on the shellside as well as on the tubeside of the tube bundle,

(iii) true countercurrent heat transfer is achievable,

(iv) a low pressure differential is achievable across the tube walls, particularly at the hot end of the tube bundle, and

(v) the inert solid material holds the tubes in position radially without significant restraining axial movement due to thermal expansion.

The outer shell may suitably be lined internally with a refractory material and may be further protected by the provision of an external cooling jacket.

Any steam reforming catalyst may be employed, suitably in a conventional ring form or in other form adapted to minimise compacting thereof.

The oxygen mixer/burner may be of conventional design and can be obtained commercially from a variety of sources. Oxygen may be fed to the mixer burner through the second inlet or through a separate inlet. Combustion may be assisted by the provision of a layer of ignition catalyst on top of the autothermal reforming catalyst.

Any autothermal reforming catalyst may be employed. The portion (iii) of the steam reforming tubes extending through the autothermal reforming zone into the combustion zone may suitably be protected from the elevated temperatures encountered therein by the provision of external ceramic sleeves, which may also be adapted at the top thereof to assist gas mixing in the combustion zone and at the bottom thereof to assist the location of the tubes.

A portion of the inert solid material of the heat exchange zone may be replaced by a carbon monoxide shift conversion catalyst, in order to release the exothermic heat of this reaction and thereby increase the temperature of the reactant gases in the steam reforming tube bundle. The inert solid material is preferably supported at a point above the tubesheet, preferably at a level corresponding approximately to the interface between the portion (i) and the portion (ii) of the tubes.

The steam reforming tube bundle and packing may in a preferred embodiment be housed within a cylindrical shroud spaced from the refractory lining of the outer shell by a small annular gap. The gap is preferably sealed at the top end thereof with refractory material. The shroud can serve two purposes. Firstly, it ensures that the radial pressure from the cyclic expansion and contraction of the tubes is taken on an unpressurised internal component and not the pressure shell and its refractory lining. This has the advantage that it makes the apparatus inherently much safer. Secondly, with the shroud fitted, the bundle and the catalyst can be extracted from the pressure shell as one. Once the shroud has been either cut or pulled off, the catalyst can be removed reasonably easily from the tubes because the bundle is exposed along its full length. There are large diameter holes in the shroud through which the gas leaves the bundle.

The outlet for synthesis gas exiting from the heat exchange zone may suitably be provided in an annular collector adapted to collect the synthesis gas, which collector may suitably be located at a level corresponding to the portion (i) of the tubes.

In another embodiment the invention provides a process for the production of synthesis gas from a gaseous hydrocarbon feed utilising the apparatus as hereinbefore described which process comprises:

feeding preheated gaseous hydrocarbon, steam and optionally carbon dioxide to the apparatus via the first inlet,

in the portion (ii) of the tube bundle of the steam reforming zone effecting a first reforming reaction at elevated temperature to produce a first reformed gaseous mixture comprising hydrogen, carbon monoxide, carbon dioxide, water and unreacted hydrocarbon, the gaseous mixture passing through the portion (iii) of the tube bundle into the combustion zone wherein it mixes with hot combustion gases produced by combustion of further gaseous hydrocarbon, and optionally steam and carbon dioxide, fed to the reactor through the second inlet, thereby heating the first reformed gaseous mixture,

the heated first reformed gaseous mixture and combustion gases passing to the autothermal reforming zone wherein they undergo a second reforming reaction to produce a second reformed gaseous mixture principally comprising hydrogen, carbon monoxide, carbon dioxide and water, the exothermic heat of reaction utilised to heat by exchange the first reformed gaseous mixture in the portion (ii) of the tube bundle,

the second reformed gaseous mixture passing to the heat exchange zone wherein it imparts heat by exchange to the gaseous reactant in the portion (ii) of the tube bundle and is thereby cooled, and finally

withdrawing the cooled second reformed gaseous mixture through the outlet.

The gaseous hydrocarbon feedstock may suitably be a gaseous paraffinic hydrocarbon, or a mixture thereof. A preferred mixture is natural gas, the composition of which may vary according to its origin, but generally principally comprises methane together with minor proportions of ethane and propane. Before entry into the apparatus the feedstock is preheated in conventional manner.

The second reformed gaseous mixture withdrawn from the outlet of the apparatus may be treated in conventional manner to obtain synthesis gas suitable for further conversion, for example into methanol or gasoline range hydrocarbons. Generally, such treatment involves further cooling by way of steam generation and optionally carbon dioxide removal. The steam and carbon dioxide (if any) obtained thereby may suitably be recycled to the process.

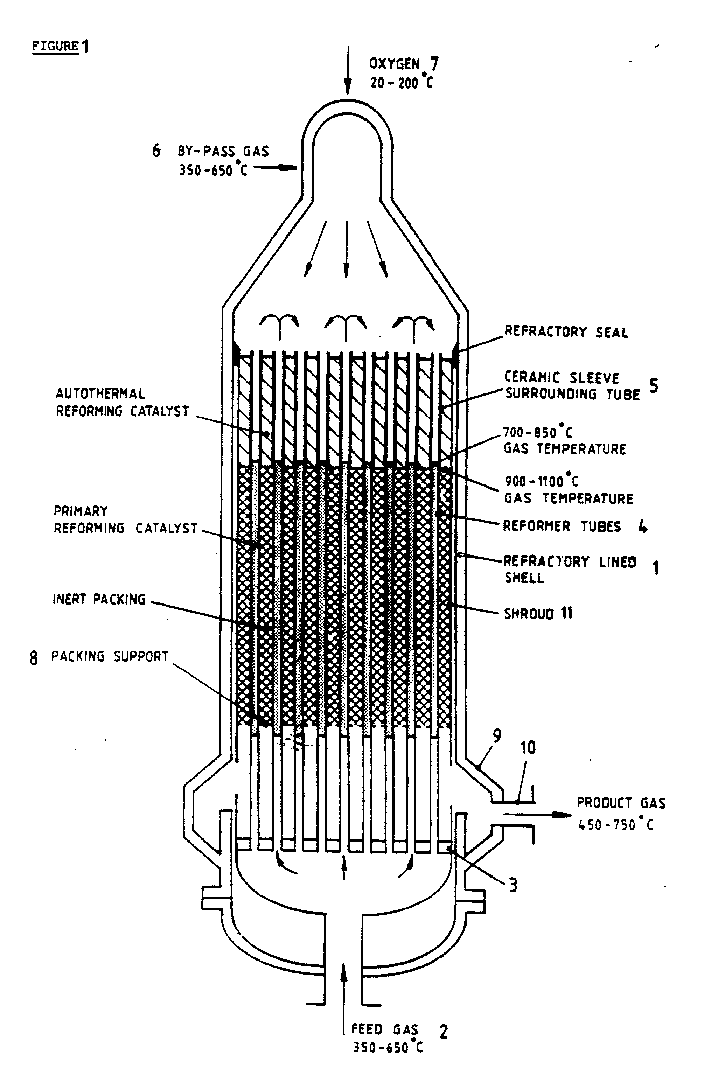

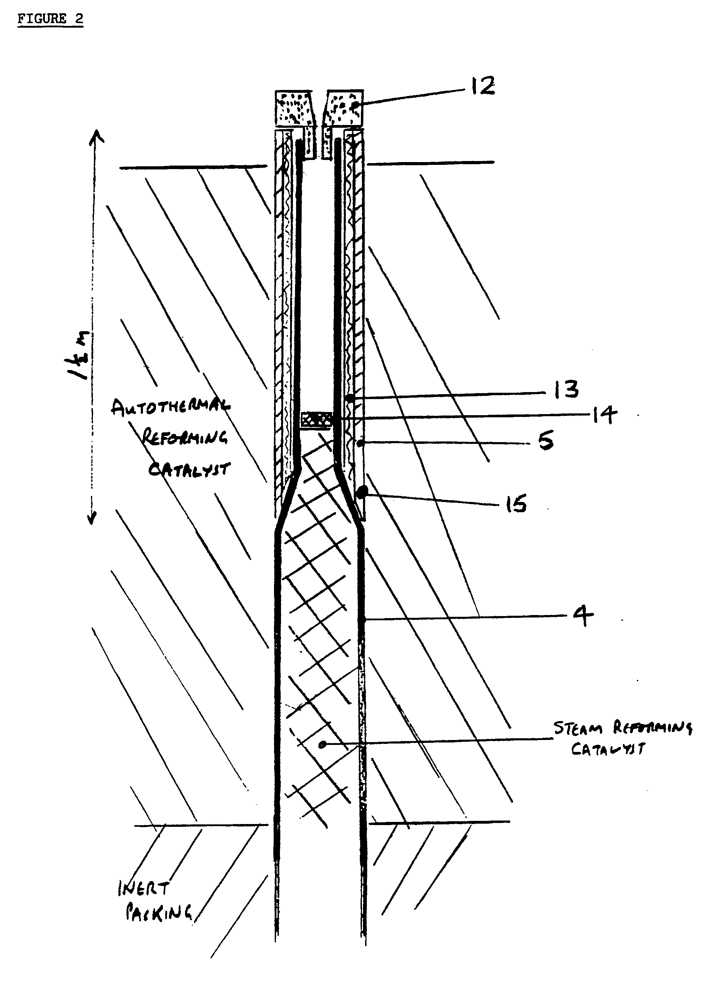

The invention will now be further illustrated by reference to Figures 1 and 2 of the Drawings in which:-

Figure 1 is a schematic representation of an apparatus according to the invention.

Figure 2 is a schematic representation of a preferred form of the upper portion of a steam reformer tube as shown in Figure 1 with particular emphasis on the protection thereof.

With reference to Figure 1, 1 is a refractory lined outer shell, 2 is a feed gas inlet, 3 is a tubesheet, 4 are steam reformer tubes, 5 are external ceramic sleeves, 6 is a second gas inlet, 7 is an oxygen inlet, 8 is an inert solid support, 9 is an annular collector, 10 is an outlet and 11 is a cylindrical shroud.

With reference to Figure 2, 4 is a steam reformer tube, 5 is an external ceramic sleeve, 12 is a cast refractory cap, 13 is a ceramic fibre cylinder, 14 is a metal or ceramic grid and 15 is a device for fixing the ceramic sleeve 5 to the steam reformer tube 4.

Preheated (350 to 650°C) natural gas, together with steam and optionally recycled carbon dioxide is fed to the shell 1 through the inlet 2 and thereafter to the steam reforming tube bundle via an inlet channel. The steam reforming tube bundle consists of a plurality of tubes 4 upwardly extending from a tubesheet 3. The tubes 4 are divided into three portions (i) a lower empty portion, (ii) an intermediate portion packed with steam reforming catalyst, and (iii) an upper empty portion open at the top having an external ceramic sleeve 5 and extending into and through a bed of autothermal reforming catalyst on the shellside thereof. A preferred form of the upper portion of one of the steam reformer tubes as shown in Figure 1 and its protection is illustrated in Figure 2. In this preferred form, the tube 4 is capped with a cast refractory cap 12 and between the tube 4 and the ceramic sleeve 5 there is interposed a ceramic fibre cylinder 13. The ceramic sleeve 5 is attached to the tube 4 by a fixing device 15, which preferably takes the form of a bayonet for easy removal and attachment. An additional preferred feature is a metal or ceramic grid 14 to limit catalyst movement at the surface.

The natural gas flows upwardly through the tubes 4 wherein its temperature is raised to about 700-850°C in the portion (ii) and undergoes a first reforming reaction catalysed by the steam reforming catalyst on the tubeside thereof to produce a mixture of hydrogen, carbon monoxide, carbon dioxide, steam and methane.

Further preheated (350 to 650°C) natural gas is fed through inlet 6 and is combusted with an oxygen-containing gas (temperature ranging from ambient to about 250°C) fed through inlet 7 in an oxygen mixer/burner (not shown) to produce a hot combustion product which mixes with the first reforming reaction product, thereby raising its temperature, before the whole gaseous mixture flows downwards through a bed of autothermal reforming catalyst. In this bed a second reforming reaction is effected at a temperature of about 900 to 1110°C and a pressure in the region of 20-80 bar to produce a second reformed gaseous mixture comprising $CO$, $CO_2$, $H_2$, $H_2O$, together with some residual methane and possibly also inert gases such as nitrogen and argon.

The gases continue to flow downwards on the shellside of the tubesbundle through a bed of inert packing material retained by a support 8, the inert packing itself serving to support the autothermal reforming catalyst bed, to locate the tubes 4 and to improve the heat transfer to the tubes.

The cooled product gases (temperature in the region 450 - 750°C) leaving the inert packing material are collected via the annular shroud 9 and leave the shell through the outlet 10.

The cylindrical shroud 11 housing the tube bundle and packing takes the radial pressure arising from the expansion and contraction of the tubes and facilitates extraction of the tube bundle and catalyst in a unitary manner.

## Claims

1. An apparatus for the production of synthesis gas from a hydrocarbon feed gas which apparatus comprises

   an outer shell,

   a first inlet at the bottom of the shell for the introduction of preheated gaseous hydrocarbon feed, steam and optionally carbon dioxide,

   a steam reforming zone comprising a plurality of tubes together forming a bundle extending upwardly from a tubesheet communicating with the first inlet, the tubes on their tubeside defining three portions (i) a lower empty portion, (ii) an intermediate portion adapted to contain steam reforming catalyst to effect a first steam reforming reaction, and (iii) an upper empty portion,

   a combustion zone comprising an oxygen mixer or mixer/burner located in the topmost region of the shell communicating with a second inlet for combustion of hydrocarbon fed therethrough to produce hot combustion gases and thereby heat the first steam reforming reaction product,

   an autothermal reforming zone defined by the shellside of the upper empty portion (iii) of the steam reforming tubes and the shell adapted to contain autothermal reforming catalyst to effect a second reforming of the first steam reforming reaction product and combustion product and thereby produce heat for heating by exchange the first steam reforming reaction product in the portion (ii) of the steam reforming tubes,

a heat exchange zone defined by the shellside of the intermediate portion (ii) of the steam reforming tubes and the shell adapted to contain an inert solid material for supporting the autothermal reforming catalyst, for supporting the steam reforming tube bundle and for assisting heat transfer between the shellside and the tubeside thereby heating gases on the tubeside and cooling synthesis gas from the autothermal reforming zone, and

an outlet for synthesis gas exiting from the heat exchange zone.

2. An apparatus for the production of synthesis gas from a hydrocarbon feed gas which apparatus comprises:

an outer shell,

a first inlet at the bottom of the shell for the introduction of preheated gaseous hydrocarbon feed, steam and optionally carbon dioxide,

a steam reforming zone comprising a plurality of tubes together forming a bundle extending upwardly from a tubesheet communicating with the first inlet, the tubes on their tubeside defining three portions (i) a lower empty portion, (ii) an intermediate portion containing steam reforming catalyst to effect a first reforming reaction, and (iii) an open ended upper empty portion,

a second inlet at the top of the shell for the introduction of hydrocarbon, and optionally steam and/or carbon dioxide,

a combustion zone comprising an oxygen mixer or mixer/burner located in the topmost region of the shell communicating with the second inlet for combustion of hydrocarbon fed therethrough to produce hot combustion gases and thereby heat the first steam reforming reaction product,

an autothermal reforming zone defined by the shellside of the upper empty portion (iii) of the steam reforming tubes and the shell containing autothermal reforming catalyst to effect a second reforming of the first steam reforming reaction product and combustion product and thereby produce heat for heating by exchange the first steam reforming reaction product in the portion (ii) of the steam reforming tubes.

a heat exchange zone defined by the shellside of the intermediate portion (ii) of the steam reforming tubes and the shell containing an inert solid material for supporting the steam reforming tube bundle and for assisting heat transfer between the shellside and the tubeside of the tubes thereby heating gases on the tubeside and cooling synthesis gas from the autothermal reforming zone,

an outlet for synthesis gas exiting from the heat exchange zone.

3. An apparatus according to either claim 1 or claim 2 wherein the outer shell is lined internally with a refractory material.

4. An apparatus according to any one of the preceding claims wherein the outer shell is provided with a cooling jacket.

5. An apparatus according to any one of claims 2 to 4 wherein combustion of hydrocarbon in the combustion zone is assisted by the provision of a layer of ignition catalyst on top of the autothermal reforming catalyst.

6. An apparatus according to any one of the preceding claims wherein the portion (iii) of the steam reforming tubes extending through the autothermal reforming zone into the combustion zone is provided with external ceramic sleeves for protection from the elevated temperatures encountered therein.

7. An apparatus according to claim 6 wherein the ceramic sleeves are adapted at the top thereof to assist gas mixing in the combustion zone.

8. An apparatus according to any one of claims 2 to 7 wherein a portion of the inert solid material of the heat exchange zone is replaced by a carbon monoxide shift conversion catalyst to release the exothermic heat of this reaction and thereby increase the temperature of the reactant gases in the steam reforming tube bundle.

9. An apparatus according to any one of claims 2 to 8 wherein the inert solid material of the heat exchange zone is supported at a point above the tubesheet at a level corresponding approximately to the interface between the portion (i) and the portion (ii) of the tubes.

10. An apparatus according to any one of claims 3 to 9 wherein the steam reforming tube bundle and packing is housed within a cylindrical shroud spaced from the refractory lining of the outer shell by a small annular gap.

11. An apparatus according to claim 10 wherein the annular gap is sealed at the top end thereof with refractory material.

12. An apparatus according to any one of the preceding claims wherein the outlet for synthesis gas exiting from the heat exchange zone is provided in an annular collector adapted to collect synthesis gas.

13. A process for the production of synthesis gas from a gaseous hydrocarbon feed utilising the apparatus as claimed in claims 2 to 12 which process comprises:

feeding preheated gaseous hydrocarbon, steam and optionally carbon dioxide to the apparatus via the first inlet,

in the portion (ii) of the tube bundle of the steam reforming zone effecting a first reforming reaction at elevated temperature to produce a first reformed gaseous mixture comprising hydrogen, carbon monoxide, carbon dioxide, water and unreacted hydrocarbon, the gaseous mixture passing through the portion (iii) of the tube bundle into the combustion zone wherein it mixes with hot combustion gases produced by combustion of further gaseous hydrocarbon, and optionally steam and carbon dioxide, fed to the reactor through the second inlet, thereby heating the first reformed gaseous mixture,

the heated first reformed gaseous mixture and combustion gases passing to the autothermal reforming zone wherein they undergo a second reforming reaction to produce a second reformed gaseous mixture principally comprising hydrogen, carbon monoxide, carbon dioxide and water, the exothermic heat of reaction utilised to heat by exchange the first reformed gaseous mixture in the portion (ii) of the tube bundle,

the second reformed gaseous mixture passing to the heat exchange zone wherein it imparts heat by exchange to the gaseous reactant in the portion (ii) of the tube bundle and is thereby cooled, and finally

withdrawing the cooled second reformed gaseous mixture through the outlet.

**Revendications**

1. Appareil pour la production de gaz de synthèse à partir d'une charge gazeuse d'hydrocarbure, comportant :

une enveloppe extérieure,

une première entrée à la partie inférieure de l'enveloppe pour l'introduction d'une charge gazeuse préchauffée d'hydrocarbure, de vapeur et, éventuellement, de dioxyde de carbone,

une zone de reformage à la vapeur comprenant une pluralité de tubes formant ensemble un faisceau s'étendant vers le haut à partir d'une plaque tubulaire communiquant avec la première entrée, les tubes, côté tube, définissant trois portions (i) une portion inférieure vide, (ii) une portion intermédiaire conçue pour contenir le catalyseur de reformage à la vapeur pour effectuer une première réaction de reformage à la vapeur, et (iii) une portion supérieure vide,

une zone de combustion comportant un mélangeur ou mélangeur/brûleur d'oxygène situé dans la région supérieure de l'enveloppe et communiquant avec une seconde entrée pour réaliser la combustion de l'hydrocarbure introduit pour produire des gaz de combustion chauds et chauffer par conséquent le produit de la première réaction de reformage à la vapeur,

une zone de reformage autothermique, définie par le côté enveloppe de la portion supérieure vide (iii) des tubes de reformage à la vapeur et par l'enveloppe, conçue pour contenir un catalyseur de reformage autothermique pour effectuer un second reformage du produit de la première réaction de reformage à la vapeur et du produit de la combustion et produisant ainsi la chaleur nécessaire pour chauffer, par échange, le produit de la première réaction de reformage à la vapeur dans la portion (ii) des tubes de reformage à la vapeur,

une zone d'échange thermique, définie par le côté enveloppe de la portion intermédiaire (ii) des tubes de reformage à la vapeur et par l'enveloppe, conçue pour contenir un matériau solide inerte pour supporter le catalyseur de reformage autothermique, pour supporter le faisceau de tubes de reformage à la vapeur et pour faciliter le transfert thermique entre le côté enveloppe et le côté tube, chauffant ainsi les gaz qui se trouvent du côté tube et refroidissant le gaz de synthèse provenant de la zone de reformage autothermique, et

une sortie pour le gaz de synthèse sortant de la zone d'échange thermique.

2. Appareil pour la production de gaz de synthèse à partir d'une charge gazeuse d'hydrocarbure, comportant :

une enveloppe extérieure,

une première entrée à la partie inférieure de l'enveloppe pour l'introduction d'une charge gazeuse préchauffée d'hydrocarbure, de vapeur et, éventuellement, de dioxyde de carbone,

une zone de reformage à la vapeur comprenant une pluralité de tubes formant ensemble un faisceau s'étendant vers le haut à partir d'une plaque tubulaire communiquant avec la première entrée, les tubes, côté tube, définissant trois portions (i) une portion inférieure vide, une portion intermédiaire contenant un catalyseur de reformage à la vapeur pour effectuer une première réaction de reformage, (iii) une portion supérieure vide à extrémité ouverte,

une seconde entrée à la partie supérieure pour l'introduction d'hydrocarbure et, éventuellement, de vapeur et/ou de dioxyde de carbone,

une zone de combustion comportant un mélangeur ou mélangeur/brûleur d'oxygène situé dans la région supérieure de l'enveloppe et communiquant avec une seconde entrée pour réaliser la combustion de l'hydrocarbure introduit pour produire les gaz de combustion chauds et chauffer, par conséquent, le produit de la première réaction de reformage à la vapeur,

une zone de reformage autothermique, définie par le côté enveloppe de la portion supérieure vide (iii) des tubes de reformage à la vapeur et par l'enveloppe, contenant un catalyseur de reformage autothermique pour effectuer un second reformage du produit de la première réaction de reformage à la vapeur et du produit de la combustion, produisant ainsi la chaleur nécessaire pour chauffer, par échange, le produit de la première réaction de reformage à la vapeur dans la portion (ii) des tubes de reformage à la vapeur,

une zone d'échange thermique, définie par le côté enveloppe de la portion intermédiaire (ii) des tubes de reformage à la vapeur et par l'enveloppe, contenant un matériau solide inerte pour supporter le faisceau de tubes de reformage à la vapeur et pour aider le transfert thermique entre le côté enveloppe et le côté tube des tubes, chauffant ainsi les gaz qui se trouvent du côté tube et refroidissant le gaz de synthèse provenant de la zone de reformage autothermique, et

une sortie pour le gaz de synthèse sortant de la zone d'échange thermique.

3. Appareil selon la revendication 1 ou la revendication 2, dans lequel l'enveloppe extérieure est doublée intérieurement d'un matériau réfractaire.

4. Appareil selon l'une quelconque des revendications précédentes, dans lequel l'enveloppe extérieure est munie d'une jaquette de refroidissement.

5. Appareil selon l'une quelconque des revendications 2 à 4, dans lequel la combustion de l'hydrocarbure dans la zone de combustion est aidée par l'apport d'une couche de catalyseur d'inflammation en tête du catalyseur de reformage autothermique.

6. Appareil selon l'une quelconque des revendications précédentes, dans lequel la portion (ii) des tubes de reformage à la vapeur, qui s'étend dans la zone de reformage autothermique pour venir dans la zone de combustion, est équipée de manchons céramiques extérieurs pour la protéger des températures élevées qu'elle y rencontre.

7. Appareil selon la revendication 6, dans lequel les manchons céramiques sont conçus, à leur partie supérieure, pour aider le mélange de gaz dans la zone de combustion.

8. Appareil selon l'une quelconque des revendications 2 à 7, dans lequel une portion du matériau solide inerte de la zone d'échange thermique est remplacée par un catalyseur de conversion par déplacement du monoxyde de carbone pour libérer la chaleur exothermique de cette réaction et augmenter de ce fait la température des gaz de réaction qui se trouvent dans le faisceau de tubes de reformage à la vapeur.

9. Appareil selon l'une quelconque des revendications 2 à 8, dans lequel le matériau solide inerte de la zone d'échange thermique est supporté en un point situé au-dessus de la plaque tubulaire, à un niveau correspondant approximativement à l'interface entre la portion (i) et la portion (ii) des tubes.

10. Appareil selon l'une quelconque des revendications 3 à 9, dans lequel le faisceau de tubes de reformage à la vapeur et le garnissage sont logés à l'intérieur d'un entourage cylindrique espacé du doublage réfractaire de l'enveloppe extérieure par un petit espace annulaire.

11. Appareil selon la revendication 10, dans lequel l'espace annulaire est rendu étanche, à son extrémité supérieure, avec des matériaux réfractaires.

12. Appareil selon l'une quelconque des revendications précédentes, dans lequel la sortie pour le gaz de synthèse sortant de la zone d'échange thermique est prévue dans un collecteur annulaire conçu pour collecter le gaz de synthèse.

13. Procédé pour la production de gaz de synthèse à partir d'une charge gazeuse d'hydrocarbure en utilisant l'appareil revendiqué dans les revendications 2 à 8, procédé qui comporte :

le fait de charger de l'hydrocarbure gazeux préchauffé, de la vapeur et, éventuellement, du dioxyde de carbone dans l'appareil par l'intermédiaire de la première entrée,

le fait d'effectuer dans la portion (ii) du faisceau de tubes de la zone de reformage à la vapeur, une première réaction de reformage à température élevée pour produire un premier mélange gazeux résultant du reformage et comprenant de l'hydrogène, du monoxyde de carbone, du dioxyde de carbone, de l'eau et de l'hydrocarbure n'ayant pas réagi, le mélange gazeux passant à travers la portion (ii) du faisceau de tubes pour venir dans la zone de combustion où il se mélange avec des gaz de combustion chauds produits par la combustion d'une autre charge d'hydrocarbure gazeux et, éventuellement, avec de la vapeur et du dioxyde de carbone, chargés dans le réacteur par la seconde entrée, chauffant ainsi le premier mélange gazeux résultant du reformage,

le fait de faire passer le premier mélange gazeux résultant du reformage, chauffé, ainsi que les gaz de combustion, dans la zone de reformage autothermique, dans laquelle ils subissent une seconde réaction de reformage pour produire un second mélange gazeux résultant du reformage et comprenant principalement de l'hydrogène, du monoxyde de carbone, du dioxyde de carbone et de l'eau, la chaleur exothermique de la réaction étant utilisée pour chauffer, par échange, le premier mélange gazeux, résultant du reformage qui se trouve dans la portion (ii) du faisceau de tubes,

le fait de faire passer le second mélange gazeux résultant du reformage dans la zone d'échange thermique, dans laquelle il fournit de la chaleur par échange avec les réactifs gazeux qui se trouvent dans la portion (ii) du faisceau de tubes et se refroidit donc, et, finalement,

le fait d'extraire le second mélange gazeux, résultant du reformage et refroidi, par la sortie.

## Ansprüche

1. Apparat zur Herstellung von Synthesegas aus Kohlenwasserstoffeinspeisungsgas, wobei der Apparat umfaßt

ein äußeres Gehäuse,

einen ersten Einlaß am Boden des Gehäuses für die Einleitung von vorgewärmter gasförmiger Kohlenwasserstoffeinspeisung, Dampf und wahlweise Kohlendioxid,

eine Dampfreformierungszone umfassend eine Vielzahl von Rohren, die zusammen ein Bündel bilden, das sich vom Rohrboden, der in Verbindung mit dem ersten Einlaß steht, nach oben erstreckt, wobei die Rohre auf ihrer Rohrseite drei Teile definieren, nämlich (i) einen unteren leeren Teil, (ii) einen mittleren Teil, der angepaßt ist einen Dampfreformierungskatalysator zu enthalten um eine erste Dampfreformierungsreaktion zu bewirken, und (iii) einen oberen, leeren Teil,

eine Verbrennungszone umfassend einen Sauerstoffmischer oder Mischer/Brenner, der sich in der obersten Region des Gehäuses befindet und mit einem zweiten Einlaß für die Verbrennung von hierdurch eingespeistem Kohlenwasserstoff in Verbindung steht, um heiße Verbrennungsgase zu erzeugen und dadurch das Produkt der ersten Dampfreformierungsreaktion zu erhitzen,

eine selbsterwärmende Reformierungszone, die von der Gehäuseseite des oberen leeren Teiles (iii) der Dampfreformierungsrohre und dem Gehäuse definiert wird, die angepaßt ist einen selbsterwärmenden Reformierungskatalysator zu enthalten, um ein zweites Reformieren des Produktes der ersten Dampfreformierungsreaktion und des Verbrennungsproduktes zu bewirken und dabei Hitze zu erzeugen für die Austauscherhitzung des Produktes der ersten Dampfreformierungsreaktion im Teil (ii) der Dampfreformierungsrohre,

eine Wärmeaustauschzone, die von der Gehäuseseite des mittleren Teiles (ii) der Dampfreformierungsrohre und dem Gehäuse definiert ist und angepaßt ist ein inertes festes Material zur Unterstützung des selbsterwärmenden Reformierungskatalysators zu enthalten, zur Stützung des Bündels von Dampfreformierungsrohren und zur Unterstützung des Wärmeübergangs zwischen der Gehäuseseite und der Rohrseite, wobei Gase an der Rohrseite erhitzt werden und Synthesegas aus der selbsterwärmenden Reformierungszone abgekühlt werden, und

einen Auslaß für Synthesegas, das aus der Wärmeaustauschzone austritt.

2. Apparat zur Herstellung von Synthesegas aus Kohlenwasserstoffeinspeisungsgas, wobei der Apparat umfaßt:

ein äußeres Gehäuse,

einen ersten Einlaß am Boden des Gehäuses für die Einleitung von vorgewärmter gasförmiger Kohlenwasserstoffeinspeisung, Dampf und wahlweise Kohlendioxid,

eine Dampfreformierungszone umfassend eine Vielzahl von Rohren, die zusammen ein Bündel bilden, das sich vom Rohrboden, der in Verbindung mit dem ersten Einlaß steht, nach oben erstreckt, wobei die Rohre auf ihrer Rohrseite drei Teile definieren, nämlich (i) einen unteren leeren Teil, (ii) einen mittleren Teil, der einen Dampfreformierungskatalysator enthält, um eine erste Reformierungsreaktion zu bewirken und (iii) einen offenen oberen leeren Teil,

einen zweiten Einlaß an der Oberseite des Gehäuses für die Einleitung von Kohlenwasserstoff und wahlweise Dampf und/oder Kohlendioxid,

eine Verbrennungszone umfassend einen Sauerstoffmischer oder Mischer/Brenner , der sich in der obersten Region des Gehäuses befindet und in Verbindung steht mit dem zweiten Einlaß für die Verbrennung von hierdurch eingespeistem Kohlenwasserstoff, um heiße Verbrennungsgase zu erzeugen und dabei das Produkt der ersten Dampfreformierungsreaktion zu erhitzen,

eine selbsterwärmende Reformierungszone, die durch die Gehäuseseite des oberen leeren Teiles (iii) der Dampfreformierungsrohre und das Gehäuse definiert ist, und die einen selbsterwärmenden Reformierungskatalysator enthält, um eine zweite Reformierung des Produktes der ersten Dampfreformierungsreaktion und des Verbrennungsproduktes zu bewirken und dabei Hitze zu erzeugen für die Austauscherhitzung des Produktes der ersten Dampfreformierungsreaktion in dem Teil (ii) der Dampfreformierungsrohre,

eine Wärmeaustauschzone, die durch die Gehäuseseite des mittleren Teiles (ii) der Dampfreformierungsrohre und das Gehäuse definiert ist, und ein inertes festes Material zur Stützung des Bündels von Dampfreformierungsrohren und zur Unterstützung des Wärmeüberganges zwischen der Gehäuseseite und der Rohrseite der Rohre, wobei Gase an der Rohrseite erhitzt und Synthesegas aus der selbsterwärmenden Reformierungszone abgekühlt werden,

einen Auslaß für Synthesegas, das aus der Wärmeaustauschzone austritt.

3. Apparat nach entweder Anspruch 1 oder Anspruch 2 worin das äußere Gehäuse innen mit einem feuerfesten Material ausgekleidet ist.

4. Apparat nach einem der vorstehenden Ansprüche, worin das äußere Gehäuse mit einer Kühlhaube ausgestattet ist.

5. Apparat nach einem der Ansprüche 2 bis 4, worin die Verbrennung von Kohlenwasserstoff in der Verbrennungszone durch die Ausstattung mit einer Schicht eines Zündungskatalysators auf dem selbsterwärmenden Katalysator unterstützt wird.

6. Apparat nach einem der vorstehenden Ansprüche, worin der Teil (iii) der Dampfreformierungsrohre, der sich durch die selbsterwärmende Reformierungszone in die Verbrennungszone erstreckt, mit äußeren Keramikisolierungen zum Schutz vor den darin vorherrschenden hohen Temperaturen ausgestattet ist.

7. Apparat nach Anspruch 6, worin die Keramikisolierungen an ihrem oberen Ende angepaßt sind, um das Mischen des Gases in der Verbrennungszone zu unterstützen.

8. Apparat nach einem der Ansprüche 2 bis 7, worin ein Teil des inerten festen Materials der Wärmeaustauschzone ersetzt ist durch einen Kohlenmonoxid-Shiftkonversions-Katalysator um die exotherme Hitze dieser Reaktion freizusetzen und dabei die Temperatur der reagierenden Gase in dem Bündel der Dampfreformierungsrohre zu erhöhen.

9. Apparat nach einem der Ansprüche 2 bis 8, worin das inerte feste Material der Wärmeaustauschzone gestützt wird an einem Punkt oberhalb des Rohrbodens auf einem Niveau, das ungefähr mit dem Übergang zwischen dem Teil (i) und dem Teil (ii) der Rohre übereinstimmt.

10. Apparat nach einem der Ansprüche 3 bis 9, worin das Bündel der Dampfreformierungsrohre und die Packung innerhalb einer zylinderförmigen Verkleidung untergebracht ist, die durch einen schmalen Ringspalt im Abstand von der feuerfesten Verkleidung des äußeren Gehäuses gehalten wird.

11. Apparat nach Anspruch 10, worin der Ringspalt an seinem oberen Ende mit feuerfestem Material abgedichtet ist.

12. Apparat nach einem der vorstehenden Ansprüche, worin der Auslaß für Synthesegas, das aus der Wärmeaustauschzone austritt, mit einem ringförmigen Kollektor ausgestattet ist, der angepaßt ist Synthesegas aufzufangen.

13. Verfahren zur Herstellung von Synthesegas aus gasförmiger Kohlenwasserstoffeinspeisung, wobei der Apparat wie in Ansprüchen 2 bis 12 beansprucht, verwendet wird, wobei das Verfahren umfaßt:

Einspeisen von vorerhitztem gasförmigem Kohlenwasserstoff, Dampf und wahlweise Kohlendioxid in den Apparat über den ersten Einlaß,

Bewirken einer ersten Reformierungsreaktion bei erhöhter Temperatur im Teil (ii) der Rohrbündel der Dampfreformierungszone, um eine erste reformierte gasförmige Mischung herzustellen, die Wasserstoff, Kohlenmonoxid,

Kohlendioxid, Wasser und nicht-umgesetzten Kohlenwasserstoff umfaßt, wobei die gasförmige Mischung durch Teil (iii) des Rohrbündels durchtritt in die Verbrennungszone, worin sie sich mit den ·heißen Verbrennungsgasen mischt, die bei der Verbrennung von weiterem gasförmigen Kohlenwasserstoff und wahlweise Dampf und Kohlendioxid, die durch den zweiten Einlaß in den Reaktor eingespeist wurden, entstanden sind, und dabei die erste reformierte gasförmige Mischung erhitzen,

Durchtreten der erhitzten ersten reformierten gasförmigen Mischung und der Verbrennungsgase durch die selbsterwärmende Reformierungszone, worin sie einer zweiten Reformierungsreaktion unterzogen werden, um eine zweite reformierte gasförmige Mischung zu bilden, die im wesentlichen Wasserstoff, Kohlenmonoxid, Kohlendioxid und Wasser umfaßt, wobei die exotherme Hitze der Reaktion zur Austauscherhitzung der ersten reformierten gasförmigen Mischung in Teil (ii) der Rohrbündels benützt wird,

Durchtreten der zweiten reformierten gasförmigen Mischung durch die Wärmeaustauschzone, worin sie Hitze durch Austausch auf den gasförmigen Reaktand in Teil (ii) des Rohrbündels überträgt und dabei abgekühlt wird, und schließlich

Ableiten der abgekühlten zweiten reformierten gasförmigen Mischung durch den Auslaß.

FIGURE 1

FIGURE 2

AUTOTHERMAL REFORMING CATALYST

12

13

14

5

15

4

STEAM REFORMING CATALYST

1 km

INERT PACKING